# EUROPÄISCHE PATENTSCHRIFT

(11) **EP 1 942 022 B1**
(45) Veröffentlichungstag und Bekanntmachung des Hinweises auf die Patenterteilung: **05.01.2011**
(21) Anmeldenummer: 08007346.3
(22) Anmeldetag: 07.02.2007
(51) Int. Cl.: B60J 1/20

(54) **Rollo mit Zentrierung durch Anschläge**
Roller blind with centring via stops
Store doté d'un centrage par butées

(30) Priorität: 22.02.2006 DE 102006008160
(43) Veröffentlichungstag der Anmeldung: 09.07.2008
(62) Teilanmeldung aus: 07002591.1
(73) Patentinhaber: BOS GmbH & Co. KG, 73760 Ostfildern (DE)
(72) Erfinder: Walter, Herbert, 73061 Ebersbach (DE); Schlecht, Werner P., 71665 Vaihingen/Enz (DE)
(74) Vertreter: Rüger, Barthelt & Abel Patentanwälte

(56) Entgegenhaltungen:
- EP-A1- 1 211 109
- DE-A1- 10 057 760
- DE-B3-102004 020 531
- US-A- 5 201 810

## Beschreibung

Aus designtechnischen Gründen ist die Heckscheibe eines Pkw nicht von zueinander parallelen Kanten begrenzt. Die Breite der Heckscheibe, beziehungsweise des Heckfensters, vermindert sich ausgehend von der Gürtellinie bis nach oben zur Dachhinterkante.

Wenn ein solches Heckfenster mit Hilfe eines Rollos abgeschattet werden soll, werden neuerdings Führungsschienen verwendet, die in der C-Säule integriert sind. Entsprechend dem Verlauf der C-Säule ändern auch diese Führungsschienen ihren Abstand voneinander. Die Folge davon ist, dass ein Heckscheibenrollo, dessen Auszugsprofil in den Führungsschienen läuft, teleskopartig längenverstellbar sein muss.

Das Auszugsprofil eines solchen Rollos, wie es beispielsweise aus der DE 2 004 020 531 B3 oder der DE 157 760 A1 bekannt ist, setzt sich aus einem Mittelstück und zwei Endstücken zusammen. Die Endstücke sind gegenüber dem Mittelstück teleskopartig verschiebbar. Die Endstücke sind mit Gleitern versehen, die in den Führungsschienen laufen.

An dem Mittelstück des Auszugsprofils ist mit einer Kante die Rollobahn befestigt, deren andere Kante an einer Wickelwelle verankert ist. Die Wickelwelle ist starr und unveränderlich im Bereich der Hutablage oder darunter innerhalb der Karosserie drehbar gelagert.

Im eingefahrenen Zustand sind die Endstücke maximal aus dem Mittelstück herausgezogen. Beim Ausfahren des Rollos, wenn sich das Auszugsprofil der Dachhinterkante nähert, gleiten die Endstücke in das Mittelstück hinein. Der Betrag der Relativbewegung zwischen Endstück und Mittelstück wird dort am größten sein, wo die Reibungskraft zwischen den beiden Teilen kleiner ist, verglichen mit dem anderen Endstück. Im voll ausgezogenen Zustand besteht somit die Gefahr, dass das Mittelstück gegenüber der konstruktiven Mitte des Rollos verschoben ist, was zu hässlichen Schrägfalten in der Rollobahn führt. Um dem entgegen zu wirken, ist es aus den oben genannten Druckschriften bekannt, die beiden Endstücke über ein Differenzialgetriebe zu koppeln, damit zwangsläufig das Mittelstück zwischen den Endstücken immer zentriert bleibt.

Die Anordnung ist sehr wirkungsvoll aber verhältnismäßig aufwändig.

Die EP 1 211 109 A1 erläutert den Aufbau eines Heckscheibenrollos mit einer Zentrierung des Mittelstücks. Das bekannte Heckscheibenrollo weist eine Wickelwelle auf, die unterhalb der Hutablage drehbar gelagert ist. Neben den Seitenkanten des Fensters verlaufen Führungsschienen, in denen ein Zugstab oder Auszugsprofil längsverschieblich geführt ist. Die Führungsschienen konvergieren in Richtung auf das obere Ende der Heckfensterscheibe, womit die Länge des Zugstabs verstellbar sein muss. Dementsprechend setzt sich der Zugstab aus einem Mittelstück zusammen, das mit der Rollobahn verbunden ist, und zwei Endstücken, die endseitig in den Führungsschienen geführt sind und die unterschiedlich tief in das Mittelstück eintauchen können.

Um das Mittelstück bezüglich der Endstücke zu zentrieren, sind in der Druckschrift zwei Lösungen vorgeschlagen. Gemäß der einen Lösung sind die beiden Endstücke über eine Art Differenzialgetriebe miteinander verbunden, um die Bewegung des einen Endstücks mit umgekehrtem Vorzeichen aber gleichem Hub auf das andere Endstück zwangsläufig übertragen wird. Dadurch bleibt die Relativstellung des Mittelstücks gegenüber den Endstücken unabhängig von der Tiefe des Eintauchens eines der Endstücke zwangsläufig erhalten.

Bei einer anderen Lösung ist vorgesehen, beide Endstücke durch Federn in die ausgeschobene Lage vorzugespannen. Dadurch soll erreicht werden, dass unterschiedliche Reibwerte der Endstücke beim Ausschieben aus dem Mittelstück zu keiner Dezentrierung führen. Die Kraft der vorgespannten Federn reicht aus um die Reibung zu überwinden damit das Mittelstück immer zentriert zwischen den beiden Endstücken bleibt.

Um dies mit kurzen Federn zu erreichen stützt sich jede der Feder an einem Bolzen ab, der in dem Mittelstück vorgesehen ist, und zwar an jener Stelle der Feder die von dem Endstück abliegt.

Weiter ist aus der US 5 201 810 A ein Fensterrollo nach den Oberbegriffe des Anspruchs 1 bekannt, wobei einen etwas flexiblen dreiteiligen Zugstab vorgesehen ist, wobei dessen Mittelstück etwas flexibel ausgebildet ist, um sich an einen gekrümmten Fensterrand anzupassen. Der Zugstab nimmt zwei Endstücke auf, die in stirnseitien Bohrungen des Mittelstücks sitzen. Die Endstücke können in einer Ausführungsform eine axiale Kraft auf den Zugstab ausüben, do dass dieser ausweicht und eine seitliche elastische Biegung erfährt.

Es ist Aufgabe der Erfindung, eine Anordnung zu schaffen, die auf einfachere Weise die Zentrierung des Mittelstücks bei voll ausgezogenem Rollo gewährleistet.

Diese Aufgabe wird erfindungsgemäß durch ein Rollo mit den Merkmalen der Anspruchs 1 gelöst.

Bei dem erfindungsgemäßen Rollo ist eine Wickelwelle vorgesehen, die ortsfest drehbar im Fahrzeug gelagert ist. An dieser Wickelwelle ist mit einer Kante eine Rollobahn befestigt, deren gegenüberliegende Kante mit einem Auszugsprofil verbunden ist. Das Auszugsprofil setzt sich aus einem Mittelstück und zwei gegenüber dem Mittelstück verschieblichen Endstücken zusammen. Die Endstücke tragen an ihren freien aus dem Mittelstück herausragenden Ende jeweils einen Gleiter. Der Gleiter läuft in der Führungsnut einer zugehörigen Führungsschiene. Die beiden Führungsschienen konvergieren in Richtung von der Wickelwelle weg.

Eine Zentrierung des Mittelstücks in der ausgefahrenen Stellung wird mit Hilfe von Anschlagflächen und Anschlagstücken erreicht. Die Anschlagflächen befinden sich beidseits des Mittelstücks und wirken mit Anschlägen zusammen, die an den Endstücken vorgesehen sind.

Da in der oberen Lage die Endstücke auf Grund der in den Führungsschienen laufenden Gleiter immer dieselbe definierte Stellung haben, kann ihre Lage mit Hilfe der Anschläge dazu ausgenutzt werden, das Mittelstück zwangsweise in die zentrierte Lage zu bringen, in der die Rollobahn frei von einem Schrägzug ist, der durch ein nicht zentriertes Mittelstück verursacht wird.

Selbst wenn sich während des Ausfahrens der Rollobahn das Mittelstück ungleichmäßig auf den beiden Endstücken verschieben sollte und die Rollobahn dabei schief gezogen wird, wird am Schluss eine Anordnung und Stellung des Mittelstücks erreicht, in der dieser Schiefzug durch entsprechende seitliche Verschiebung des Mittelstücks mit Hilfe der Zentriereinrichtung beseitigt wird.

Dabei wird durchaus in Kauf genommen, dass während der Ausfahrbewegung der Rollobahn unter Umständen Schrägfalten entstehen. Dieser Zustand ist jedoch transient und wird vergleichsweise schnell durchlaufen, womit die Schrägfalten nicht weiter störend in Erscheinung treten.

Es ist von Vorteil, wenn entweder die Anschläge auf den Endstücken oder die damit zusammenwirkenden Flächen am Mittelstück verstellbar sind. Auf diese Weise lassen sich Karosserie- und Einbautorelanzen kompensieren, und zwar hinsichtlich des Abstands als auch des Versatzes der Mitte zwischen den Führungsschienen.

Im Übrigen sind Weiterbildungen der Erfindung Gegenstand von Unteransprüchen.

Wie sich unschwer aus der Figurenbeschreibung erkennen lässt, handelt es sich hierbei um vereinfachte Ausführungsbeispiele, die lediglich den Zweck haben, das Grundprinzip der Erfindung zu erläutern. Es ist ferner unschwer zu erkennen, dass eine Reihe von Abwandlungen möglich sind, um das Grundprinzip der Erfindung an die jeweiligen Einbauverhältnisse anzupassen.

In der Zeichnung zeigen:
- Fig. 1: einen Blick in den Fondbereich eines aufgebroche- nen gezeigten Pkws, in einer perspektivischen Darstellung,
- Fig. 2: ein Ausführungsbeispiel des Heckfensterrollos des Kraftfahrzeugs nach Fig. 1, mit einer an dem Mit- telstück sitzenden Zentriereinrichtung, in einer stark schematisierten Darstellung,
- Fig. 3: das Heckfenster des Kraftfahrzeugs nach Fig. 1, mit an den Endstücken sitzenden Anschlägen zur Zentrierung des Mittelstücks, in einer stark schematisieren Darstellung, und
- Fig. 4: Exzenter zur Bildung der Anschläge für das Heck- fensterrollo nach Fig. 3.

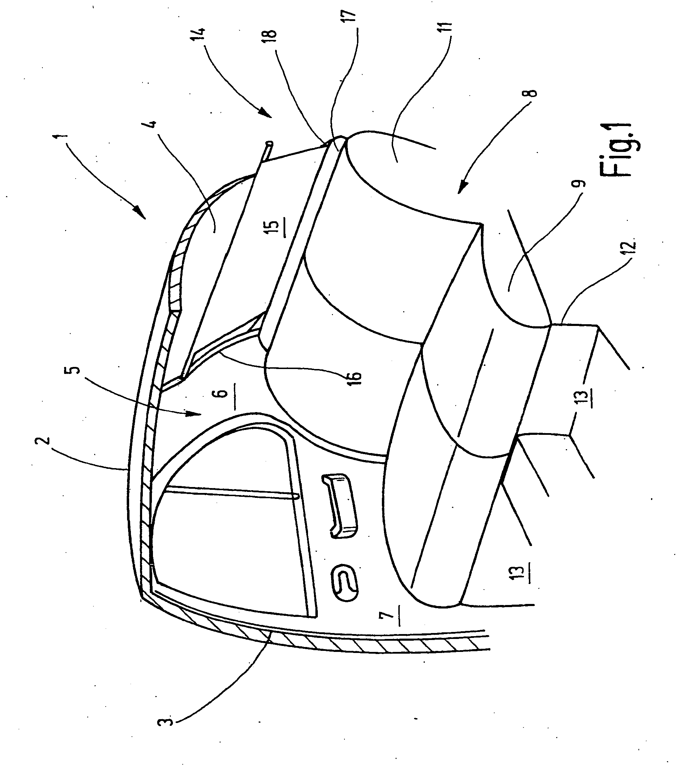

Fig. 1 stellt den aufgebrochenen abgeschnittenen Fond-bereich eines Pkw dar. Die Figur veranschaulicht einen Blick auf die rechte Innenseite, die zu der weggebrochenen linken Innenseite spiegelbildlich ist. Die Darstellung ist vereinfacht, so sind beispielsweise Karosserieinnenstrukturen, wie Versteifungen und Befestigungsmittel, nicht gezeigt, da die Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule, die sich im Abstand zu der B-Säule 3 befindet. Die C-Säule 5 trägt eine Innenverkleidung 6. Die Breite des Heckfensters 4 ist in der Nähe seiner Oberkante geringer als auf der Höhe der Gürtellinie der Karosserie.

Zwischen der B-Säule 3 und der C-Säule 5 ist an der B-Säule eine hintere rechte Seitentür 7 in der bekannten Weise anscharniert.

Auf der Höhe der hinteren rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogener Rollobahn 15 sowie eine der seitlichen Führungsschienen 16 zu erkennen. Die Führungs-schiene 16 beginnt an einer hinter der Rücksitzlehne 11 vorhandenen Hutablage 17 und verläuft neben der seitlichen Fensterkante. Eine weitere Führungsschiene befindet sich spiegelbildlich in dem weggebrochen Teil der Karosserie. Die Führungsschienen besteht aus Kunststoff und sind in der die C-Säule 5 verkleidenden Innenverkleidung integriert.

Außerdem enthält die Hutablage 17 einen durchgehenden Auszugsschlitz 18, aus dem die Rollobahn 15 beim Ausfahren herausläuft.

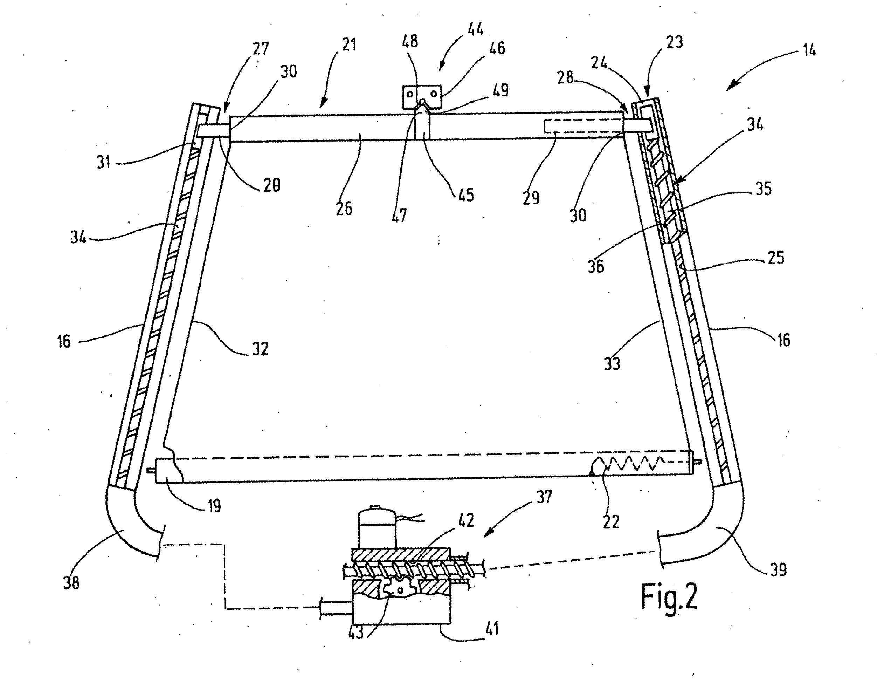

Der prinzipielle Aufbau des Heckscheibenrollos 14 ergibt sich aus Fig. 2.

Zu dem Heckfensterrollo 14 gehören neben der Rollobahn 15 eine unterhalb des Auszugsschlitzes 18 beziehungsweise unterhalb der Hutablage 17 drehbar gelagerte Wickelwelle 19 sowie ein Auszugsprofil 21. Die Rollobahn 15 ist in Annäherung der Fenstergeometrie trapezförmig zugeschnitten und somit am oberen Ende schmäler als dem unteren Ende neben der Wickelwelle 19.

An der Wickelwelle 19 ist mit einer Kante die Rollobahn 15 befestigt. Mit Hilfe einer als Federmotor dienenden Schraubenfeder 22 wird die Wickelwelle 19 im Sinne eines Aufwickelns der Rollobahn 15 auf die Wickelwelle 19 vorgespannt. Hierzu ist die Schraubenfeder 22, wie schematisch angedeutet, einends an der Innenseite der Wickelwelle 19 festgelegt, während das andere Ende karosserieseitig drehfest verankert ist.

Das Auszugsprofil 21 ist beidends in den beiden Führungsschienen 16 geführt. Diese sind hinter der Seitenverkleidung 6 der C-Säule 5 angeordnet, folgen in ihrem Verlauf etwa der Kontur des Heckfensters 4 und konvergieren entsprechend in Richtung auf ihr oberes Ende. In Fig. 2 sind sie der Einfachheit halber gerade gezeigt. Die Führungsschienen 16 beginnen unterhalb der Hutablage 17 und enden in der Nähe der Oberkante des Heckfensters 4.

Die beiden Führungsschienen 16 haben den selben Aufbau. Es genügt damit, die Gestalt anhand einer der beiden Führungsschienen 16 im Einzelnen zu erläutern.

Die Führungsschiene 16 enthält eine Führungsnut 23, deren Querschnitt sich aus einer Nutenkammer 24 und einem Nutenschlitz 25 zusammensetzt. Der Nutenschlitz 25 zeigt eine geringere Weite als die Nutenkammer 24, die im Querschnitt kreisförmig ist.

Der Nutenschlitz 25 öffnet sich in Richtung auf das Heckfenster 5 und somit bei der schematischen Darstellung in Richtung auf den Betrachter.

Das Auszugsprofil 21 setzt sich aus einem Mittelstück 26 mit unveränderlicher starrer Länge und zwei teleskopisch verschiebbaren Endstücken 27 und 28 zusammen. Die beiden Endstücke 27 und 28 sind wiederum zueinander spiegelbildlich, weshalb es genügt, lediglich eines der beiden im Einzelnen zu erläutern. Die Beschreibung gilt sinngemäß auch für das andere der beiden Endstücke 27, 28, wobei zur Bezeichnung der dort vorhandenen Strukturen die selben Bezugszeichen verwendet werden.

Zu dem Endstück 27 gehört eine als Flachkant ausgebildete Stange 29, die in einem nicht weiter dargestellen Aufnahmekanal innerhalb des Mittelstücks 26 längs verschieblich unverdrehbar geführt ist und aus einem benachbarten Stirnende 30 des Mittelstücks 26 hervorsteht. Um das Eintauche der Stange 29 in das Mittelstück zu versinnbildlichen ist die Stange 29 auf der rechten Seite innerhalb des Mittelstücks 26 gestrichelt gezeichnet.

Die Stange 29 ist an ihrem freien aus dem Mittelstück 26 herausstehenden Ende bezogen auf die Zeichenebene nach unten in Richtung auf den Schlitz 25 abgewinkelt und führt durch den Schlitz 25 in die Führungsnut 23 hinein. Innerhalb der Führungsnut 23 ist an der Stange 29 ein Gleitstück 31 befestigt. Das Gleitstück 31 weist eine Gestalt auf, die mit dem Querschnitt der Nutenkammer 24 zusammenpasst. Die Dicke der Stange 29 ist so bemessen, dass sie klemmfrei durch den Führungsschlitz 25 laufen kann.

Die Rollobahn 15 ist, wie bereits erwähnt, trapezförmig zugeschnitten und wird von zwei Seitenkanten 32 und 33 begrenzt, die bei ausgezogener Rollobahn etwa parallel zu den beiden Führungsschienen 16 laufen. Das untere Ende der Rollobahn 15 ist in bekannter Weise an der Wickelwelle 19, beispielsweise über eine Kedernut befestigt, während die obere Kante an dem Mittelstück 26 verankert ist. Die Verbindung zwischen dem Mittelstück 26 und der Rollobahn 15 ist bekannt und, da sie nicht Gegenstand der Erfindung ist, braucht sie auch im Einzelnen nicht erläutert zu werden. Wichtig ist lediglich, festzuhalten, dass die Breite der Rollobahn 15 im Anschluss an das Mittelstück 26 dessen Länge entspricht. Die Länge des Mittelstücks 26, d.h. der Abstand zwischen den Stirnenden 30, ist wiederum, wie gezeigt, geringfügig kürzer als der Abstand zwischen den beiden Führungsschienen 16 an jener Stelle, in die das Auszugsprofil 21 kommt, wenn die Rollobahn 15 vollständig ausgefahren ist.

Um die Rollobahn 15 vor dem Heckfenster 4 aufspannen zu können, läuft in jeder der beiden Nutenkammern 24 jeweils ein ausknicksicher geführtes biegeelastisches lineares Schubglied 34. Das Schubglied 34 setzt sich aus einer im Querschnitt kreisförmigen Seele 35 und einer auf der Seele 35 an deren Außenseite verlaufenden Wendel 36 zusammen. Die Wendel 36 ist mit der Seele 35 starr verbunden und bildet auf der Außenseite der Seele 35 gleichsam eine rundum laufende Verzahnung. Insoweit kann das lineare Schubglied 34 als beigeelastische rundumverzahnte Zahnstange aufgefasst werden. Das Schubglied 34 stößt mit seinem freien Ende gegen das benachbarte Stirnende des Gleitstücks 31.

Die beiden Schubglieder 34 werden über einen gemeinsamen Getriebemotor 37 bewegt, weshalb von dem unteren Ende jeder Führungsschiene 16 ein Führungsrohr 38, 39 zu dem Getriebemotor 37 führt. Dieser umfasst ein Getriebegehäuse 41, durch das zwei Bohrungen 42 parallel zueinander hindurch führen. Wegen der aufgebrochenen Darstellung ist lediglich eine der beiden Bohrungen 42 in der Figur erkennbar. Diese Bohrungen 42 laufen tangential an einem Zahnrad 43 vorbei, das drehfest auf einer Getriebeausgangswelle des Getriebemotors 37 sitzt. Das Zahnrad 43 ist mit einer Verzahnung versehen, die zu der Teilung der Wendel 36 auf der Seele 35 passt. Es entsteht eine formschlüssige Verbindung zwischen dem Zahnrad 43 und jedem der beiden Schubglieder 34.

Da die beiden Schubglieder 34 an diametral gegenüberliegenden Seiten mit dem Zahnrad 43 kämmen, werden sie bei der Rotation des Zahnrades 43 jeweils um gleiche Beträge in entgegengesetzter Richtung bewegt.

Der aus der Sicht des betreffenden Führungsrohres 38, 39 über das Zahnrad 43 überstehende Teil des betreffenden Schubgliedes 34 wird in einem nicht weiter gezeigten Speicherrohr aufgenommen.

Die insoweit beschriebene Anordnung arbeitet wie folgt:
Bei vollständig eingefahrenem Rollo 14 liegt das Auszugsprofil 21 auf dem Auszugsschlitz 18 in der Hutablage 17 auf und verdeckt diesen, zumindest über die Länge des Mittelstücks 26. In der eingefahrenen Stellung ist das Auszugsprofil 21 maximal an die Wickelwelle 19 angenähert und befindet sich somit auch in einem Bereich, in dem die beiden Führungsschienen 16 voneinander den maximalen Abstand aufweisen. Da die Länge des Mittelstücks 26 konstant ist, sind zur Kompensation des Abstands der beiden Führungsschienen 16 die Endstücke 28, 29 maximal aus dem Mittelstück 26 herausgezogen. Sie stecken jedoch mit ihren Enden nach wie vor in dem Mittelstück 26 verschiebbar.

Um diese Position zu ermöglichen, sind durch entsprechendendes Ingangsetzen des Getriebemotors 37 die beiden Schubglieder 34 weit genug aus den Führungsschienen 19 zurück gezogen, damit das Auszugsprofil 21 auf der Hutablage 17 aufliegen kann.

Wenn ausgehend von dieser eingefahrenen Stellung die Rollobahn 15 vor dem Heckfenster 4 ausgebreitet werden soll, wird der Getriebemotor 37 in Gang gesetzt. Der Getriebemotor 37 schiebt in entgegengesetzte Richtung, jedoch um gleiche Beträge, die beiden Schubglieder 34 in die Führungsschienen 16 vor. Gegen die Wirkung des Federmotors 22, der ständig bestrebt ist die Rollobahn 15 auf der Wickelwelle 19 aufzuwickeln, wird das Auszugsprofil 21 in Richtung auf die Oberkante des Heckfensters 4 und damit in Richtung auf das obere Ende der beiden Führungsschienen 16 bewegt. Die Kraft, die der Getriebemotor 37 erzeugen kann, ist größer als die Rückzugskraft, die der Federmotor 22 ausübt.

Während der Ausfahrbewegung verkürzt sich der Abstand zwischen den beiden Führungsschienen 16 aus der Sicht des Auszugsprofils 21. Dadurch werden die beiden Endstücke 28 und 29 mit den Führungsstangen 29 zunehmend tiefer in das Mittelstück 26 hineingeschoben. Ihre maximal eingeschobene Stellung nehmen die beiden Endstücke 27 und 28 ein, wenn das Auszugsprofil 21 die obere Endlage vor dem Heckfenster 4 erreicht hat.

Die Rollobahn 15 selbst ist biegeschlaff und damit praktisch nicht in der Lage, andere Kräfte als Zugkräfte, die senkrecht zu der Längserstreckung des Mittelstücks 26 wirken, auf dieses Mittelstück 26 auszuüben. Insbesondere ist die Rollobahn 15 nicht in der Lage, das Mittelstück 26 parallel zu seiner Längserstreckung auf den beiden Endstücke 27, 28 zu verschieben.

Sollte, und was zu erwarten ist, die Reibkraft, die die Führungsstangen 29 der beiden Endstücke 27 und 28 in dem Mittelstück 26 haben, nicht exakt gleich sein, werden die beiden Endstücke 27 und 28 unterschiedlich tief in das Mittelstück 26 eingeschoben sein. Das Mittelstück 26 ist damit nicht mehr in der Solllage gegenüber der Wickelwelle 19, sondern es ist zur rechten oder zur linken Seite, bezogen auf die Darstellung in der Zeichenebene, verschoben. Dieses Verschieben führt zu Schrägspannungen in der Rollobahn 15 und damit zu recht hässlichen Schrägfalten, die als unschön empfunden werden.

Um diesem Verzug entgegen zu wirken, kann das Rollo 14 mit einer Zentriereinrichtung 44 versehen werden, die nicht zur Erfindung gehört. Die Zentrierein-richtung 44 setzt sich aus einem ersten Zentriermittel 45 und einem zweiten Zentriermittel 46 zusammen. Das erste Zentriermittel 45 ist in dem gezeigten Fall ein Ausleger, der mit einer über das Auszugsprofil 21 vorstehenden Spitze 47 versehen ist. Das zweite Zentriermittel 46 ist ortsfest in dem Fahrzeug neben der Oberkante des Heckfensters 4 angebracht. Das zweite Zentriermittel 46 enthält eine in Richtung auf das Mittelstück 26 sich öffnende Gabelung 48. Die Spitze 47 und die Gabelung 48 sind zueinander komplementär. Außerdem ist die Weite der Gabelung 48 so gewählt, dass sie weiter ist als der maximal zu erwartende Längsversatz des Mittelstücks 26 zwischen den beiden Führungsschienen 16.

Wenn beim Ausfahren der Rollobahn 15 der oben erwähnte seitliche Versatz des Mittelstücks 26 gegenüber der Wickelwelle 19 entsteht, wird gegen Ende der Ausfahrbewegung die Spitze 47 des ersten Zentriermittels 45 in die Gabelung 48 des zweiten Zentriermittels 46 eindringen. Da die Spitze 47 schräge, beispielsweise unter 90° zueinander verlaufende Flanken 49 aufweist, wird sich die Spitze 47 selbsttätig in der komplementären Gabelung 48 zentrieren und dabei entsprechend das Mittelstück 26 parallel zu seiner Längserstreckung verschieben. Die Lage des ersten Zentriermittels 45 ist zu der Lage des ortsfesten zweiten Zentriermittels 46 so gewählt, dass am Ende der Ausfahrbewegung des Mittelstücks 26 in einer Stellung zwischen den Führungsschienen 16 steht, die keinen Querzug in der Rollobahn 15 hervorruft.

Bei dieser Art der Zentrierung wird bewusst in Kauf genommen, dass möglicherweise während der Ausfahrbewegung durchaus Schrägfalten in der Rollobahn 15 entstehen können. Am Ende der Ausfahrbewegung sind die Schrägfalten in jedem Falle eliminiert, weil durch die Zentriereinrichtung 44 das Mittelstück 26 des Auszugsprofils 21 in die richtige Stellung gezwungen wird.

Die beiden Zentriermittel 45 und 46 sind in der Fig. 2 stark schematisiert gezeigt. Selbstverständlich sind bei der praktischen Ausführung der Zentriermittel in einer ästhetisch sinnvollen Weise gestaltet, um möglichst wenig nach außen störend in Erscheinung zu treten. Es ist ferner unschwer zu.erkennen, dass die gewünschte Zentrierung erreicht werden kann, wenn, wie gezeigt, die Spitze 49 in Richtung parallel zur Ausfahrbewegung der Rollobahn 15 zeigt, ebenso wie die Zentrierung dann möglich ist, wenn die Spitze senkrecht zu Zeichenebenen und damit senkrecht zur Bewegungsrichtung zeigt.

Es bedarf auch keiner weiteren Darstellung, um zu begreifen, dass die gewünschte Zentrierung erreicht werden kann, wenn die Spritze 49 ortsfest ist und die Gabelung 48 als entsprechende Öffnung an dem Mittelstück 26 vorgesehen wird.

Eine Justage ist ohne weiteres möglich, indem entweder durch konstruktive Maßnahmen die Lage der Spitze 47, das heißt die Lage des ersten Zentriermittels 45 längs dem Mittelstück 26, einstell- beziehungsweise justierbar ist oder die Lage des ortsfesten Zentriermittels 46. Die hierfür erforderlichen Maßnahmen sind dem Fachmann geläufig und brauchen nicht erläutert zu werden.

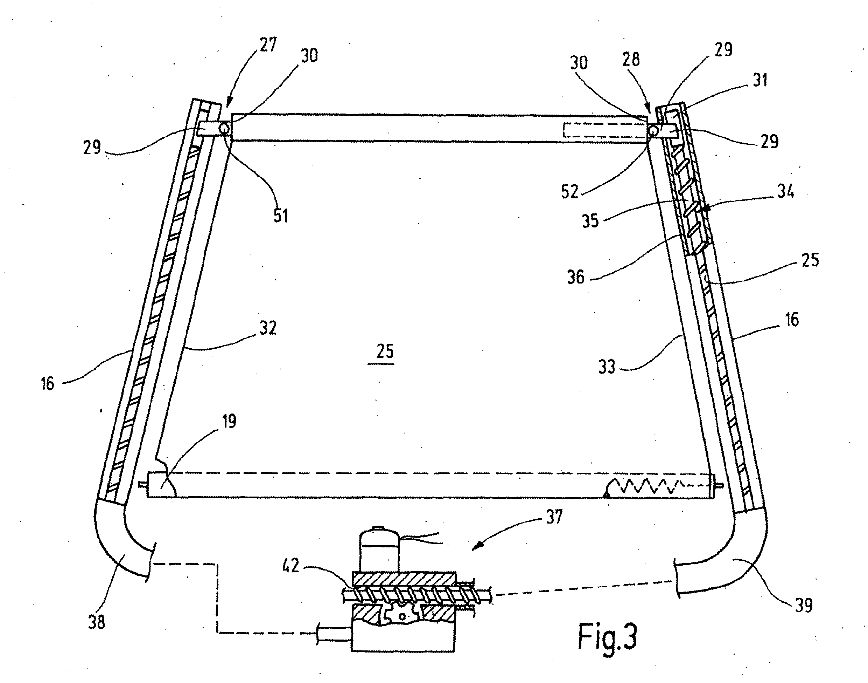

Bei der nicht zur Erfindung gehörenden Ausführungsform nach Fig. 2 erfolgt die Zentrierung unter Zuhilfenahme eines ortsfesten Zentriermittels. Fig. 3 zeigt eine Ausführungsform, bei der die Zentrierung des Mittelstücks 26 ausschließlich durch Maßnahmen erreicht wird, die an dem Auszugsprofil 21 selbst getroffen sind und der Erfindgung entsprechen.

Im Übrigen entspricht der Aufbau, wie Fig. 3 erkennen lässt, dem Aufbau des Rollos 14 nach Fig. 2, weshalb in Fig. 3 sich die Bezugszeichen aus Fig. 2 wiederholen und die Beschreibung insoweit in identischer Weise gilt.

An Stelle der beiden Zentriermittel 45, 46 sind bei der Ausführungsform nach Fig. 3 auf den Stangen 29 der beiden Endstücke 27 und 28 zwei Anschläge 51 und 52 vorgesehen. Die Anschläge 51 und 52 sitzen auf der Flachseite der jeweiligen Stange 29 und stehen als kurze zylindrische Zapfen oder Köpfe vor. Der Abstand und die Lage der beiden Anschläge 51 und 52 voneinander ist so gewählt, dass bei ausgefahrenem Rollo 14 das Mittelstück 26 zwischen ihnen hinreichend zentriert ist, das heißt, gleichgültig an welchem der beiden Anschläge 51, 52 das Mittelstück 26 mit seinem Stirnende 30 anliegt, ist der Restzentrierungsfehler zu klein, als dass er ausreichen würde, in der Rollobahn 15 Schrägfalten zu erzeugen.

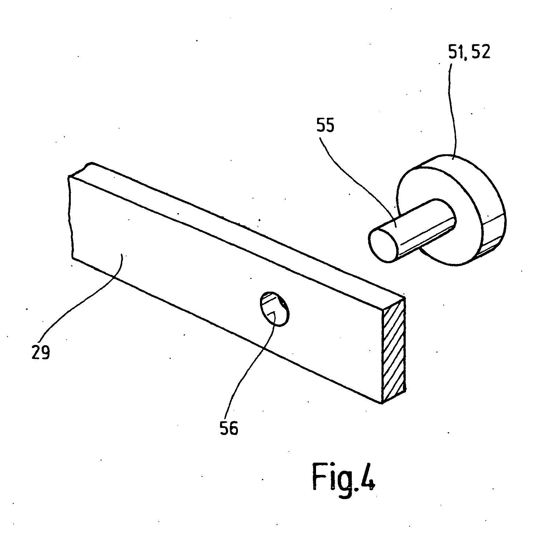

So weit die Anschläge 51, 52 ortsfest und unverstellbar sind, können Lagetoleranzen der Führungsschienen 16 dennoch zu einem Schrägverzug führen. Um diese Anschläge 51, 52, die mit den Stirnenden 30 des Mittelstücks 26 zusammenwirken einstellbar zu machen kann die Maßnahme gemäß Fig. 4 getroffen werden. Wie dort zu erkennen ist sind die Anschläge 51 und 52 zylindrische Exzenter. Von einer Stirnseite geht eine Achse 55 aus, die dazu vorgesehen ist, in eine entsprechende Bohrung 56 in der Führungsstange 29 eingesetzt zu werden. Nach dem Einsetzen des zylindrischen Zapfens 55 wird dieser auf der gegenüberliegenden Seite unter Ausbildung eines Schließkopfes vernietet. Die Vernietung erzeugt einen hinreichenden Reibschluss, damit einerseits eine selbstständige Drehung des zylindrischen Kopfes 51, 52 unmöglich ist, andererseits der Kopf jedoch jederzeit mit Hilfe eines Werkzeugs verdreht werden kann.

Die Handhabung und Justage der Ausführungsform nach Fig. 4 sieht folgendermaßen aus: im Rahmen der Montage wird die Rollobahn 15 in ihre ausgefahrene Stellung gebracht. Durch Drehen der beiden Anschläge 51, 52, die exzentrisch zu dem Zapfen 55 sind, wird einerseits der Abstand zwischen den Anschlägen 51, 52 eingestellt und andererseits die Lage des Mittelstücks 26 gegenüber den Endstücke 27, 28 bis keine Schrägfalten mehr zu beobachten sind. Da die Anschläge 51, 52 entsprechend fest vernietet sind, ist eine spätere Verstellung während des Betriebs des Rollos 14 ausgeschlossen.

Die Erfindung ist vorstehend in Verbindung mit einem Heckscheibenrollo im Einzelnen erläutert. Es versteht sich jedoch, dass diese Art der Zentrierung nicht auf Rollos an Heckscheiben beschränkt ist. Vielmehr kann die geoffenbarte Zentrierung des Mittelstücks 26 bei einem längenverstellbaren Auszugsprofil auch bei Dachfensterrollos oder Seitenfesterrollos in Kraftfahrzeugen eingesetzte werden. Da der Grundaufbau bei dieser Art von Rollos der gleiche ist, erübrigen sich entsprechende zeichnerische Darstellungen. Sie würden sich im wesentlichen auf eine Wiederholung der gezeigten konstruktiven Elemente beschränkten.

Ein Kraftfahrzeugfesterrollo weist eine Rollobahn mit etwa trapezförmigem Zuschnitt auf. An der Querkante mit der kürzesten Erstreckung sitzt ein Auszugsprofil, das endseitig in Führungsschienen geführt ist. Die Führungsschienen ändern ihren Abstand voneinander. Um diese Abstandsänderung zu kompensieren gliedert sich das Auszugsprofil in ein Mittelstück, an dem die Rollobahn befestigt ist, und zwei Endstücke, die in den Führungsschienen laufen. Um Schrägfalten in der Rollobahn bei der vollständig ausgefahrenen Position zu vermeiden, sind Zentriereinrichtungen vorgesehen. Diese Zentriereinrichtungen sind lediglich bei voll ausgezogenem Rollo wirksam und wirken auf das Mittelstück ein.

## Patentansprüche

1. Fensterrollo (14) zum Regulieren des Lichteintritts durch ein Fenster (4) in einen Innenraum eines Kraftfahrzeugs,
mit wenigstens einer Wickelwelle (19), die drehbar gelagert ist,
mit wenigstens einer Rollobahn (15), die mit einer Kante an der Wickelwelle (19) befestigt ist,
mit wenigsten einem Paar von Führungsschienen (16), von denen sich jede seitlich neben der aufgespannten Rollobahn (15) erstreckt,
mit einem längenveränderlichen Auszugsprofil (21), das mit einer von der Wickelwelle (19) abliegenden Kante der Rollobahn (15) verbunden ist und der sich aus einem Mittelstück (26) und zwei Teleskopstücken (27,28) zusammensetzt, die an dem Mittelstück (26) verschieblich gelagert,
mit einem ersten und einem zweiten Anlagefläche, die an dem Mittelstück (26) ortsfest vorgesehen sind,
mit einem ersten und einem zweiten Anschlag (51, 52), von denen jeder auf einem der beiden Teleskopstücke (27, 28) angeordnet ist und von denen jeder mit einem zugehörigen Anlagefläche an dem Mittelstück (26) derart zusammenwirkt, dass bei vollständig ausgefahrener Rollobahn (15) das Mittelstück (26) zwischen ihnen bezüglich der Führungsschienen (16) hinreichend zentriert ist, **dadurch gekennzeichnet, daß** die zwei Teleskopstücken (27, 28) endseitig in den Führungsschienen (16) geführt sind und daß die Anlagefläche Stirnenden (30) sind.

2. Fensterrollo nach Anspruch 1, **dadurch gekennzeichnet, dass** wenigstens einer der Anschläge (51, 52) als Exzenter ausgeführt ist.

3. Fensterrollo nach Anspruch 1, **dadurch gekennzeichnet, dass** an dem Mittelstück (26) verstellbare Gegenanschläge vorgesehen sind.

## Claims

1. Window roller blind (14) for regulating the entry of light through a window (4) into an inside space of a motor vehicle,
with at least one winding shaft (19), which is rotatably mounted,
with at least one blind sheet (15), which is fastened at one edge to the winding shaft (19),
with at least one pair of guide rails (16), each of which extends laterally adjacent to the opened-out blind sheet (15),
with a longitudinally adjustable pull-out profile (21), which is connected to an edge of the blind sheet (15) remote from the winding shaft (19) and which consists of a central piece (26) and two telescopic pieces (27, 28), which are displaceably disposed on the central piece (26),
with a first and a second abutment surface, which are fixedly provided on the central piece (26),
with a first and a second stop (51, 52), each of which is arranged on one of the two telescopic pieces (27, 28), and each of which cooperates with an associated abutment surface on the central piece (26) in such a manner that when the blind sheet (15) is fully extended the central piece (26) is sufficiently centred between these in relation to the guide rails (16), **characterised in that** the two telescopic pieces (26, 28) are guided at the ends in the guide rails (16) and that the abutment surfaces are end faces (30).

2. Window roller blind according to claim 1, **characterised in that** at least one of the stops (51, 52) is configured as a cam.

3. Window roller blind according to claim 1, **characterised in that** adjustable counter-stops are provided on the central piece (26).

## Revendications

1. Store à enrouleur (14) pour réguler la pénétration de lumière, par une fenêtre (4), dans un habitacle d'un véhicule automobile,
comprenant au moins un arbre d'enroulement (19) qui est monté tournant, comprenant au moins une bande de store (15) qui est fixée par un bord à l'arbre d'enroulement (19),
comprenant au moins une paire de rails de guidage (16) qui s'étendent chacun sur le côté et à proximité de la bande de store (15) déroulée,
comprenant un profilé de traction (21) réglable en longueur, qui est relié à un bord de la bande de store (15) éloigné de l'arbre d'enroulement (19), et qui se compose d'un élément central (26) et de deux éléments télescopiques (27, 28) qui sont montés coulissants sur l'élément central (26),
comprenant une première et une deuxième surface d'appui qui sont prévues de manière stationnaire sur l'élément central (26),
comprenant une première et une deuxième butée (51, 52) qui sont chacune disposées sur l'un des deux éléments télescopiques (27, 28) et qui coopèrent chacune avec une surface d'appui associée de l'élément central (26), de manière à ce que, lorsque la bande de store (15) est complètement sortie, l'élément central (26) soit suffisamment centré entre elles par rapport aux rails de guidage, **caractérisé par le fait que** les deux éléments télescopiques (27, 28) sont guidés avec leurs extrémités dans les rails de guidage (16) et que les surfaces d'appui sont des extrémités frontales (30).

2. Store à enrouleur selon la revendication 1, **caractérisé par le fait qu'**au moins une des butées (51, 52) est réalisée sous forme d'excentrique.

3. Store à enrouleur selon la revendication 1, **caractérisé par le fait que** des contrebutées réglables sont prévues sur l'élément central (26).
